# EUROPÄISCHE PATENTSCHRIFT

(11) **EP 1 619 111 B1**
(45) Veröffentlichungstag und Bekanntmachung des Hinweises auf die Patenterteilung: **22.08.2007**
(21) Anmeldenummer: 04017628.1
(22) Anmeldetag: 23.07.2004
(51) Int. Cl.: B62D 49/06, A01B 59/06, B62D 49/04

(54) **Selbstfahrendes Fahrzeug mit einem anbaubaren Arbeitsgerät**
Self-propelled vehicle with attachable tool
Véhicule automobile avec outil de travail ajoutable

(43) Veröffentlichungstag der Anmeldung: 25.01.2006
(73) Patentinhaber: Julius Tielbürger GmbH & Co. KG, D-32351 Stemwede-Oppenwehe (DE)
(72) Erfinder: Tielbürger, Jörg, 32351 Stemwede-Oppenwehe (DE)
(74) Vertreter: Dantz, Jan Henning

(56) Entgegenhaltungen:
- AT-B- 396 452
- FR-A- 2 560 577
- GB-A- 2 052 239
- US-A- 5 950 336

## Beschreibung

Die Erfindung betrifft ein selbstfahrendes Fahrzeug, insbesondere einen Quad, mit einem an der Frontseite mittels einer Kupplungsvorrichtung anbaubaren Arbeitsgerät, wobei ein fahrzeugseitiges Kupplungsteil fest am Fahrzeug montiert und ein geräteseitiges Kupplungsteil direkt oder über eine Koppeleinrichtung am Arbeitsgerät fest angebracht ist, und die beiden Kupplungsteile formschlüssig und verriegelt koppelbar sind.

Das in Rede stehende Fahrzeug ist für den öffentlichen Straßenverkehr zugelassen und wird darüber hinaus bei Anbau der Arbeitsgeräte für die Landschaftspflege eingesetzt. Ein Quad ist ein motorradähnliches Fahrzeug mit vier Rädern und Allradantrieb. Bei landwirtschaftlich genutzten Schleppern und den Anbaugeräten sind sogenannte Kupplungsdreiecke bekannt, bei denen am Arbeitsgerät ein aus einem Profilstahl gebildetes Dreieck festgelegt ist, welches mit einem am Schlepper angebauten Dreieck gekoppelt werden kann. Dies erfolgt durch die Hydraulikanlage des Schleppers. Da das in Rede stehende Fahrzeug auch im öffentlichen Straßenverkehr benutzt wird, besteht bei Einsatz eines solchen Kupplungsdreiecks eine Verletzungsgefahr aufgrund der scharfen Kanten, da das fahrzeugseitige Kupplungsteil stets am Fahrzeug verbleibt. Außerdem ist nachteilig, dass bei solchen Kupplungssystemen die Kupplungsteile relativ weit vorstehen, wodurch die Geländegängigkeit eingeschränkt wird. Im Gelände schlägt das Kupplungssystem bei Bodenunebenheiten oder bei einer großen Einfederung der Vorderräder auf den Boden auf. Darüber hinaus wird insbesondere ein Quad als sportliches Fahrzeug gesehen, so dass das aus dem Schlepperbereich stammende Kupplungsdreieck nicht als eine brauchbare Lösung in Frage kommt. Darüber hinaus wird bei einem Quad das Arbeitsgerät, beispielsweise eine Kehrbürste, über einen eigenen Antrieb angetrieben, wodurch es sehr schwer ist, diese anzukuppeln.

Aus der AT.396 452 B. ist eine Geräteanbaueinrichtung für Fahrzeuge bekannt, die mit einer am Arbeitsgerät ausgebildeten Anbauplatte, mit einem am Fahrzeug etwa vertikal montierten Geräteträger, mit einer oberen Einhängevorrichtung, mit einer unteren Verbindungsvorrichtung und mit einer hydraulischen Verriegelungseinrichtung ausgestattet ist, wobei die Verriegelungseinrichtung eine drehbare, exzentrisch gelagerte Spannvorrichtung zur Fixierung der am Geräteträger anliegenden, eingehängten Aufnahmeplatte aufweist. Der Geräteträger ist am Fahrzeug um eine untere horizontale Achse nach vorne geneigt montiert. Die Einhängevorrichtung weist einen drehbar gelagerten Tragbolzen und eine etwa U-förmige Aufnahme für den Tragbolzen auf. An dem Tragbolzen ist die Spannvorrichtung exzentrisch ausgebildet. Die Verbindungsvorrichtung ist mit zwei koaxial verschiebbaren Verriegelungsbolzen und zwei, je eine Eintrittsöffnung für die Verriegelungsbolzen aufweisende Seitenlaschen ausgestattet. Die hydraulische Verriegelungseinrichtung beaufschlagt die beiden Verriegelungsbolzen verschiebbar und den Tragbolzen verdrehbar.

Der Erfindung liegt die Aufgabe zugrunde, ein selbstfahrendes Fahrzeug, insbesondere ein geländegängiges Quad, welches insbesondere für den frontseitigen Anbau eines Arbeitsgerätes ausgelegt ist, so zu gestalten, dass die Verletzungsgefahr beim Benutzen öffentlicher Straßen praktisch ausgeschlossen werden kann, und dass darüber hinaus beim Einsatz im Gelände ohne einem angebauten Arbeitsgerät verhindert wird, dass die Kupplung auf den Boden schlägt.

Die gestellte Aufgabe wird gelöst, indem das fahrzeugseitige Kupplungsteil zwei horizontal, parallel und im Abstand zueinander sowie übereinander stehende Kupplungsstangen aufweist, und das geräteseitige Kupplungsteil als Kupplungsmaul ausgebildet ist, welches mit Aufnahmen für die Kupplungsstangen versehen ist, dass die Maulkupplung zwei aufrechte, parallel und im Abstand zueinander stehende Platten aufweist, die über eine Quertraverse oder über mehrere Quertraversen miteinander verbunden sind, und dass die der unteren Kupplungsstange des fahrzeugseitigen Kupplungsteiles zugeordneten Aufnahmen des geräteseitigen Kupplungsteiles nach unten offen sind, dass die der oberen Kupplungsstange zugeordneten Aufnahmen in Richtung zum fahrzeugseitigen Kupplungsteil offen sind, so dass zunächst die Aufnahme in die untere Kupplungsstange einhängbar und anschließend durch Schwenken des Arbeitsgerätes unter Anhebung des geräteseitigen Kupplungsteiles das Kupplungsmaul in die obere Kupplungsstange einhängbar ist.

Die Kupplungsstangen werden entweder aus einem Rohr oder einem Rundstahl gefertigt. Dieses fahrzeugseitige Kupplungsteil verbleibt stets am Fahrzeug und ist im wesentlichen frei von scharfen Kanten und Ecken, so dass sie sinngemäß wie eine Stoßstange anzusehen sind. Es besteht daher bei einer Benutzung im öffentlichen Straßenverkehr keine nennenswerte Verletzungsgefahr. Durch die Ausbildung des geräteseitigen Kupplungsteiles mit einem Kupplungsmaul kann zunächst das Arbeitsgerät an das Fahrzeug herangezogen werden, wobei der dem Fahrzeug zugewandte Bereich zunächst soweit angehoben wird, dass die Aufnahmen des Kupplungsmaules in die untere Kupplungsstange eingehängt werden können. Anschließend wird je nach Art der Ankopplung, entweder das Arbeitsgerät oder das Kupplungsmaul so geschwenkt, dass die der oberen Kupplungsstange zugehörigen Auf nahmen auf diese Kupplungsstange gehängt werden können. Das Kupplungsmaul kann in Abhängigkeit von der Gestaltung des Arbeitsgerätes entweder direkt daran angeordnet werden oder an einem Ausleger, der das Arbeitsgerät trägt.

Da die Maulkupplung zwei aufrechte, parallel und im Abstand zueinander angeordnete Platten aufweist, die über eine Quertraverse oder über mehrere Quertraversen miteinander verbunden sind, ergibt sich eine konstruktiv einfache Bauweise. Die Quertraverse bzw. die Quertraversen könnten beispielsweise auch benutzt werden, um das Kupplungsmaul am Arbeitsgerät oder einem das Arbeitsgerät tragenden Ausleger festzulegen. Diese Festlegung muss so getroffen sein, dass sich das Kupplungsmaul gegenüber dem Arbeitsgerät nicht bewegen kann. Es sei noch erwähnt, dass die Aufnahmen für die Kupplungsstangen in den beiden Platten angeordnet sind. Dabei ist es dann zum Anhängen des Arbeitsgerätes besonders vorteilhaft, wenn die der unteren Kupplungsstange zugeordneten Aufnahmen nach unten offen sind, da dadurch das Einhängen erleichtert wird. Die der oberen Kupplungsstange zugeordneten Aufnahmen sind in Richtung zum Fahrzeug bzw. zur Kupplungsstange offen, so dass bei einer entsprechenden Auslegung sinngemäß ein selbsttätiges Einhängen erfolgt, wenn die Maulkupplung bzw. der Ausleger mit dem Arbeitsgerät angehoben oder geschwenkt wird.

Damit die Kupplungsstangen so nahe wie möglich am Fahrzeug angeordnet sind, ist vorgesehen, dass die Kupplungsstangen in senkrechter Projektion übereinander angeordnet sind, das heißt, sie sind versatzfrei übereinander in Fahrzeuglängsrichtung angeordnet. Die möglichst dichte Anbringung am Fahrzeug ist vorteilhaft, da üblicherweise die Arbeitsgeräte an der Frontseite angehängt werden. In einer alternativen Ausführung ist es jedoch auch möglich, dass, die Kupplungsstangen in Längsrichtung des Fahrzeuges versetzt sind, wobei vorzugsweise die obere Kupplungsstange in Richtung zum geräteseitigen Kupplungsteil gegenüber der unteren Kupplungsstange versetzt ist. Dadurch wird das Einkuppeln des Arbeitsgerätes erleichtert, da der Schwenkwinkel verringert wird. Da die Kupplungsstangen relativ große Kräfte aufnehmen müssen, muss sichergestellt sein, dass diese Kräfte auf den Rahmen des Fahrzeuges abgeleitet werden. Dies erfolgt zweckmäßigerweise über wenigstens ein Verbindungsprofil, welches beispielsweise mit dem Rahmen des Fahrzeugs verschraubt ist.

Zur Kupplung ist es zweckmäßig, wenn an den Platten des Kupplungsteiles ein Bügel festgelegt ist. Diese Ausführung ist besonders vorteilhaft, wenn zunächst nur ein Ausleger mit dem Kupplungsmaul an die Stangenkupplung angehängt wird und später das Arbeitsgerät an den Ausleger angekoppelt wird.

In besonders vorteilhafter Weise sind die der unteren Kupplungsstange zugeordneten Ausnehmungen halbkreisförmig oder U-förmig gestaltet. Die der oberen Kupplungsstange zugeordneten Ausnehmungen sind zur Kupplungsstange hin offen, damit das Kupplungsmaul angehängt werden kann. Diese Aufnahme ist so gestaltet, dass im angehängten Zustand die nutzbaren Bereiche der Aufnahmen übereinander liegen. Zum leichteren Anhängen an die obere Kupplungsstange ist vorgesehen, dass die den freien Stirnkanten der Maulkupplung zugeordneten, die Aufnahme begrenzenden Flächen als Schrägflächen bzw. Einführflächen ausgebildet sind. Dadurch erfolgt sinngemäß ein selbsttätiges Anheben des Kupplungsmaules. Zur Sicherung des Kupplungsmaules sind die den unteren Schrägflächen gegenüberliegenden Flächen Begrenzungsflächen für Hintergreifnasen, die die obere Kupplungsstange hintergreifen.

Wie bereits ausgeführt, wird mit dem Fahrzeug auch im Gelände gefahren. Um zu verhindern, dass das angekoppelte Arbeitsgerät ungewollt durch Entkopplung des Kupplungsmaules mit den Kupplungsstangen herunterfällt, ist vorgesehen, dass die den freien Stirnkanten zugeordneten Bereiche der oberen Aufnahmen durch Verriegelungselemente verschließbar sind. Dies kann beispielsweise durch Bolzen erfolgen, die an Laschen festgelegt sind, die drehbar an den Platten des Kupplungsteiles gelagert sind. Zweckmäßigerweise sind die Laschen in den freien Stimendbereichen auf eine Stange aufgesetzt, die drehbar in Bohrungen der Platten des Kupplungsteiles gelagert ist. Zur gleichmäßigen sowie einfachen Betätigung ist vorgesehen, dass eine der Laschen mit einem Handgriff versehen ist. Dies könnte beispielsweise ein einfacher Stift oder ein Abschnitt einer Stange sein.

Anhand der beiliegenden Zeichnung wird die Erfindung noch näher erläutert. Es zeigt:

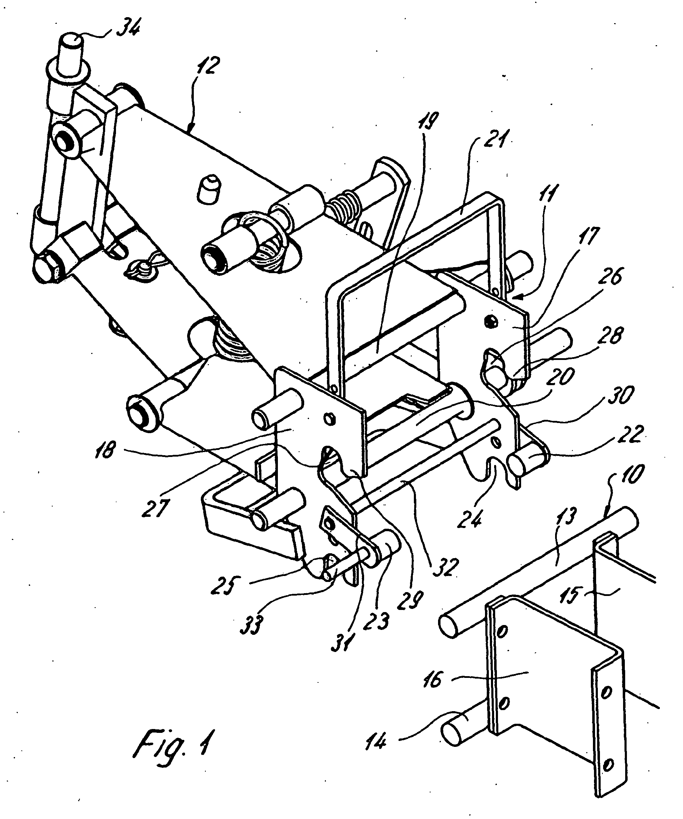

- Figur 1: eine bevorzugte Ausführung einer Kupplungsvorrichtung für ein erfindungsgemäßes Fahrzeug in perspektivischer Darstellung, wobei das fahrzeugseitige Kupplungsteil und das geräteseitige Kupplungsteil voneinander getrennt sind.

Aus Gründen der vereinfachten Darstellung ist im wesentlichen nur eine Möglichkeit der Anhängung eines nicht dargestellten Arbeitsgerätes an ein nicht dargestelltes Fahrzeug dargestellt. Die Kupplungsvorrichtung besteht im dargestellten Ausführungsbeispiel im wesentlichen aus dem fahrzeugseitigen Kupplungsteil 10, dem geräteseitigen Kupplungsteil 11 und einem die Verbindung zum nicht dargestellten Arbeitsgerät herstellenden Ausleger 12, an dem das geräteseitige Kupplungsteil 11 unbeweglich festgelegt ist. Das fahrzeugseitige Kupplungsteil 10 besteht im wesentlichen aus zwei parallel und im Abstand sowie in der senkrechten Projektion übereinander angeordneten Kupplungsstangen 13, 14, die aus einem Rundstahlabschnitt oder einem Rohrabschnitt gefertigt sind. Diese Kupplungsstangen 13, 14 sind an zwei im Querschnitt U-förmig gestalteten Verbindungsprofilen 15, 16 in an sich bekannter Weise befestigt. Die Verbindungsprofile 15, 16 stehen parallel und im Abstand zueinander und sind am Rahmen des Fahrzeuges fest angebracht, beispielsweise durch Verschraubung. Diese Verbindungsprofile 15, 16 wirken auch als Zentrierung für das geräteseitige Kupplungsteil 11, da nach der Ankopplung eine Verschiebung in Längsrichtung der Kupplungsstangen 13, 14 verhindert wird.

Das geräteseitige Kupplungsteil 11 besteht im wesentlichen aus zwei aufrechten, parallel und im Abstand zueinander angeordneten Platten 17, 18, zwei die Platten 17, 18 verbindende Traversen 19, 20, einem Bügel 21 und zwei Verriegelungselementen 22, 23 in Form von Bolzen. Zur Ankopplung an die Kupplungsstangen 13, 14 des fahrzeugseitigen Kupplungsteiles 10 sind die beiden Platten 17, 18 im unteren Bereich mit zwei nach unten offenen Aufnahmen 24, 25 und zwei zur oberen Kupplungstange 13 offenen Aufnahmen 26, 27 ausgestattet. Die Traversen 19, 20 dienen außerdem zur Verbindung des geräteseitigen Kupplungsteiles 11 mit dem Ausleger 12. Die unteren Aufnahmen 24, 25 sind umgekehrt U-förmig gestaltet, während die oberen Aufnahmen 26, 27 so gestaltet sind, dass die nutzbaren Bereiche der unteren Aufnahmen 24, 25 und der oberen Aufnahmen 26, 27 übereinander liegen. An der Einführseite, das heißt, an den freien Stirnkanten der Platten 17, 18 sind die die Aufnahme 24, 25, 26, 27 bildenden Flächen als Schrägflächen, das heißt, in Richtung zur zugehörigen oberen Kupplungsstange 13 geneigte Schrägflächen ausgebildet, während der gegenüberliegende obere Bereich eine Verriegelungsnase 28, 29 begrenzt. Aus den Platten 17, 18 in Verbindung mit den Aufnahmen 24, 25, 26, 27 wird ein Kupplungsmaul gebildet. Zum Anhängen werden zunächst die unteren Aufnahmen 24, 25 auf die untere Kupplungsstange 14 aufgesetzt und anschließend wird die aus dem geräteseitigen Kupplungsteil 11 und dem Ausleger 12 gebildete Einheit geschenkt, wobei durch die erwähnten Schrägflächen ein Anheben erfolgt, so dass die obere Kupplungsstange 13 in den oberen Bereichen der Aufnahmen 26, 27 liegt. Die Verriegelungselemente 22, 23 werden zur Sicherung der Einheit bzw. des Arbeitsgerätes in den Einführbereich der oberen Aufnahmen 26, 27 geschwenkt und dort gegen ein Zurückschwenken gesichert, beispielsweise durch Klemmung. Zur einfachen Betätigung sind die Verriegelungselemente 22, 23 an den einander zugewandten Seiten von zwei Laschen 30, 31 angeordnet, die schwenkbar an den Platten 17, 18 gelagert sind. Dazu sind sie auf die Endbereiche einer durchgehenden Stange 32 aufgesetzt, die drehbar in Bohrungen der Platten 17, 18 gelagert ist. Damit beide Verriegelungselemente 22, 23 gleichzeitig geschwenkt werden können, ist an einer Lasche 30 , 31 im dem Drehpunkt gegenüberliegenden Bereich ein Handgriff 33 festgelegt.

Der Ausleger 12 ist an der dem geräteseitigen Kupplungsteil 11 abgewandten Seite noch mit einem Kupplungsbolzen 34 ausgestattet, der das nicht dargestellte Arbeitsgerät aufnimmt. Die Sicherung erfolgt dann über ebenfalls nicht dargestellte Gestänge.

Die Erfindung ist nicht auf das dargestellte Ausführungsbeispiel beschränkt. Wesentlich ist, dass die Kupplungsvorrichtung ein fahrzeugseitiges Kupplungsteil 10 und ein geräteseitiges Kupplungsteil 11 aufweist, die werkzeuglos und ohne weitere Verwendung von mechanischen Bauelementen miteinander koppelbar sind. Ferner ist von besonderer Bedeutung, dass zur Sicherheit beim Befahren von öffentlichen Straßen und Wegen das am Fahrzeug verbleibende Kupplungsteil 10 sinngemäß wie eine Stoßstange wirkt, das heißt, dass es frei von scharfen Ecken und Kanten ist.

### Bezugszeichen

- 10: fahrzeugseitiges Kupplungsteil
- 11: geräteseitiges Kupplungsteil
- 12: Ausleger
- 13, 14: Kupplungsstangen
- 15, 16: Verbindungsprofile
- 17, 18: Platten
- 19, 20: Traversen
- 21: Bügel
- 22, 23: Verriegelungselemente
- 24, 25: Aufnahmen
- 26, 27: Aufnahmen
- 28, 29: Verriegelungsnase
- 30, 31: Laschen
- 32: Stange
- 33: Handgriff
- 34: Kupplungsbolzen

## Patentansprüche

1. Selbstfahrendes Fahrzeug, insbesondere ein Quad, mit einem an der Frontseite mittels einer Kupplungsvorrichtung anbaubaren Arbeitsgerät, wobei ein fahrzeugseitiges Kupplungsteil (10) fest am Fahrzeug montiert und ein geräteseitiges Kupplungsteil (11) direkt oder über eine Koppeleinrichtung (12) am Arbeitsgerät fest angebracht ist, und die beiden Kupplungsteile (10, 11) formschlüssig und verriegelbar koppelbar sind, **dadurch gekennzeichnet, dass** das fahrzeugseitige Kupplungsteil (10) zwei horizontal parallel und im Abstand zueinander sowie übereinander stehenden Kupplungsstangen (13, 14) aufweist, und das geräteseitige Kupplungsteil (11) als Kupplungsmaul ausgebildet ist, welches mit Aufnahmen (24, 25, 26, 27) für die Kupplungsstangen (13, 14) versehen ist, und dass das Kupplungsmaul (11) zwei aufrechte; parallel und im Abstand zueinander stehende Platten (17, 18) aufweist, die über eine Quertraverse oder über mehrere Quertraversen (19, 20) miteinander verbunden sind, und dass die der unteren Kupplungsstange (14) des fahrzeugseitigen Kupplungsteiles (10) zugeordneten Aufnahmen (24, 25) des geräteseitigen Kupplungsteiles (11) nach unten offen sind, und dass die der oberen Kupplungsstange (13) zugeordneten Aufnahmen (26, 27) in Richtung zum fahrzeugseitigen Kupplungsteil (10) offen sind, so dass zunächst die Aufnahmen (24, 25) in die untere Kupplungsstange (14) einhängbar und anschließend durch Schwenken des Arbeitsgerätes unter Anhebung des geräteseitigen Kupplungsteiles das Kupplungsmaul (11) in die obere Kupplungsstange (13) einhängbar ist.

2. Selbstfahrendes Fahrzeug nach Anspruch 1, **dadurch gekennzeichnet, dass** die Kupplungsstangen (13, 14) in der senkrechten Projektion übereinander angeordnet sind.

3. Selbstfahrendes Fahrzeug nach Anspruch 1, **dadurch gekennzeichnet, dass** die Kupplungsstangen (13, 14) in Längsrichtung des selbstfahrenden Fahrzeuges versetzt sind, wobei vorzugsweise die obere Kupplungsstange (13) gegenüber der unteren Kupplungsstange (14) in Richtung zum Kupplungsteil (11) versetzt ist.

4. Selbstfahrendes Fahrzeug nach einem oder mehreren der vorhergehenden Ansprüche 1 bis 3, **dadurch gekennzeichnet, dass** die Kupplungsstangen (13, 14) an wenigstens einem fest am Fahrzeug angebrachtes Verbindungsprofil (15, 16) festgelegt sind.

5. Selbstfahrendes Fahrzeug nach einem oder mehreren der vorhergehenden Ansprüche 1 bis 4, **dadurch gekennzeichnet, dass** an den Platten (17, 18) des geräteseitigen Kupplungsteiles (11) ein Bügel (21) festgelegt ist.

6. Selbstfahrendes Fahrzeug nach Anspruch 5, **dadurch gekennzeichnet, dass** die der unteren Kupplungsstange (14) zugeordneten Aufnahmen (24, 25) halbkreisförmig oder umgekehrt U-förmig ausgebildet sind.

7. Selbstfahrendes Fahrzeug nach Anspruch 1, **dadurch gekennzeichnet, dass** die den freien Stirnkanten zugeordneten Flächen der der oberen Kupplungsstange (13) zugeordneten Aufnahmen (26, 27) im unteren Bereich als Schrägflächen ausgebildet sind.

8. Selbstfahrendes Fahrzeug nach Anspruch 7, **dadurch gekennzeichnet, dass** die den Schrägflächen gegenüberliegenden Flächen Hintergreifnasen für die obere Kupplungsstange (13) begrenzen.

9. Selbstfahrendes Fahrzeug nach einem oder mehreren der vorhergehenden Ansprüche 1 bis 8, **dadurch gekennzeichnet, dass** die oberen Aufnahmen (26, 27) nach dem Hintergreifen der oberen Kupplungsstange (13) durch schwenkbare Verriegelungselemente (22, 23) verriegelt sind.

10. Selbstfahrendes Fahrzeug nach Anspruch 9, **dadurch gekennzeichnet, dass** die Verriegelungselemente (22, 23) als Bolzen ausgebildet sind, die an Laschen (30, 31) angesetzt sind, die schwenkbar an den Platten (17, 18) gelagert sind.

11. Selbstfahrendes Fahrzeug nach Anspruch 10, **dadurch gekennzeichnet, dass** die Laschen (30, 31) auf die freien Endbereiche einer in den Platten (17, 18) drehbar gelagerten Stange (32) aufgesetzt sind, und dass die Verriegelungselemente (22, 23) in dem der Stange (32) gegenüberliegenden Bereich angeordnet sind.

12. Selbstfahrendes Fahrzeug nach Anspruch 11, **dadurch gekennzeichnet, dass** auf eine der Laschen (30, 31) ein Handgriff (33) aufgesetzt ist.

13. Selbstfahrendes Fahrzeug nach einem oder mehreren der vorhergehenden Ansprüche 1 bis 12, **dadurch gekennzeichnet, dass** das geräteseitige Kupplungsteil (11) an einem Ausleger (12) fest angesetzt ist, der an dem gegenüberliegenden Ende einen vertikalen Kupplungsbolzen (34) aufweist.

## Claims

1. Self-propelled vehicle, in particular a quadbike, having a working implement which can be fitted to the front side by means of a coupling device, wherein a vehicle-side coupling part (10) is fixedly mounted on the vehicle and an implement-side coupling part (11) is fixedly attached directly or via a coupler device (12) to the working implement, and the two coupling parts (10, 11) can be coupled in a form-fitting and lockable manner, **characterized in that** the vehicle-side coupling part (10) has two coupling rods (13, 14) which are situated horizontally, parallel to and spaced apart from one another and one above the other, and the implement-side coupling part (11) is embodied as a coupling jaw which is provided with receptacles (24, 25, 26, 27) for the coupling rods (13, 14), and **in that** the coupling jaw (11) has two plates (17, 18) which are situated vertically, parallel to and spaced apart from one another and are connected to one another by means of a transverse member or by means of a plurality of transverse members (19, 20), and **in that** those receptacles (24, 25) of the implement-side coupling part (11) which are assigned to the lower coupling rod (14) of the vehicle-side coupling part (10) are open in the downward direction, and **in that** those receptacles (26, 27) which are assigned to the upper coupling rod (13) are open in the direction of the vehicle-side coupling part (10), so that initially the receptacles (24, 25) can be hooked onto the lower coupling rod (14) and then, by pivoting the working implement and raising the implement-side coupling part, the coupling jaw (11) can be hooked onto the upper coupling rod (13).

2. Self-propelled vehicle according to Claim 1, **characterized in that** the coupling rods (13, 14) are arranged one above the other in the vertical projection.

3. Self-propelled vehicle according to Claim 1, **characterized in that** the coupling rods (13, 14) are offset in the longitudinal direction of the self-propelled vehicle, with preferably the upper coupling rod (13) being offset relative to the lower coupling rod (14) in the direction of the coupling part (11).

4. Self-propelled vehicle according to one or more of the preceding Claims 1 to 3, **characterized in that** the coupling rods (13, 14) are fixed to at least one profiled connecting section (15, 16) which is fixedly attached to the vehicle.

5. Self-propelled vehicle according to one or more of the preceding Claims 1 to 4, **characterized in that** a bracket (21) is fixed to the plates (17, 18) of the implement-side coupling part (11).

6. Self-propelled vehicle according to Claim 5, **characterized in that** those receptacles (24, 25) which are assigned to the lower coupling rod (14) are of semicircular or inverted-U-shape design.

7. Self-propelled vehicle according to Claim 1, **characterized in that** those faces of the receptacles (26, 27), which are assigned to the upper coupling rod (13), which are assigned to the free end edges are designed in the lower region as inclined faces.

8. Self-propelled vehicle according to Claim 7, **characterized in that** the faces situated opposite the inclined faces have engage-around lugs for the upper coupling rod (13).

9. Self-propelled vehicle according to one or more of the preceding Claims 1 to 8, **characterized in that**, after the engagement around the upper coupling rod (13), the upper receptacles (26, 27) are locked by means of pivotable locking elements (22, 23).

10. Self-propelled vehicle according to Claim 9, **characterized in that** the locking elements (22, 23) are embodied as pegs which are mounted on lugs (30, 31) which are pivotably mounted on the plates (17, 18).

11. Self-propelled vehicle according to Claim 10, **characterized in that** the lugs (30, 31) are mounted on the free end regions of a rod (32) which is rotatably mounted in one of the plates (17, 18), and **in that** the locking elements (22, 23) are arranged in the region situated opposite the rod (32).

12. Self-propelled vehicle according to Claim 11, **characterized in that** a handle (33) is mounted on one of the lugs (30, 31).

13. Self-propelled vehicle according to one or more of the preceding Claims 1 to 12, **characterized in that** the implement-side coupling part (11) is fixedly mounted on an arm (12) which, at the opposite end, has a vertical coupling peg (34).

## Revendications

1. Véhicule automoteur, en particulier un quad, avec un outil de travail pouvant être placé sur le côté avant au moyen d'un dispositif d'accouplement, une partie d'accouplement (10) côté véhicule étant montée de façon fixe sur le véhicule et une partie d'accouplement (11) côté outil étant placée directement ou de façon fixe au moyen d'un dispositif d'accouplement (12) sur l'outil de travail, et les deux parties d'accouplement (10, 11) pouvant être couplées par complémentarité de forme et de façon verrouillable, **caractérisé en ce que** l'appareil d'accouplement (10) côté véhicule présente deux tiges d'accouplement (13, 14) disposées horizontalement et en parallèle et placées à distance l'une au-dessus de l'autre, et la partie d'accouplement (11) côté outil est conçue comme une mâchoire d'accouplement, qui est dotée de logements (24, 25, 26, 27) pour les tiges d'accouplement (13, 14), et **en ce que** la mâchoire d'accouplement (11) présente deux plaques (17, 18) verticales, parallèles entre elles et espacées l'une de l'autre, qui sont reliées entre elles au moyen d'une traverse ou de plusieurs traverses (19, 20) et **en ce que** les logements (24, 25) associés à la tige d'accouplement (14) inférieure de la partie d'accouplement (10) côté véhicule, de la partie d'accouplement (11) côté outil sont ouverts vers le bas et **en ce que** les logements (26, 27) associés à la tige d'accouplement (13) supérieure sont ouverts en direction de la partie d'accouplement (10) côté véhicule, de sorte que d'abord les logements (24, 25) peuvent être accrochés dans la tige d'accouplement (14) inférieure et ensuite, par basculement de l'outil de travail et par soulèvement de la partie d'accouplement côté outil, la mâchoire d'accouplement (11) peut être accrochée dans la tige d'accouplement (13) supérieure.

2. Véhicule automoteur selon la revendication 1, **caractérisé en ce que** les tiges d'accouplement (13, 14) sont disposées l'une au-dessus de l'autre dans la projection verticale.

3. Véhicule automoteur selon la revendication 1, **caractérisé en ce que** les tiges d'accouplement (13, 14) sont décalées dans la direction longitudinale du véhicule automoteur, la tige d'accouplement (13) supérieure étant décalée de préférence par rapport à la tige d'accouplement (14) inférieure en direction de la partie d'accouplement (11).

4. Véhicule automoteur selon l'une ou plusieurs des revendications précédentes 1 à 3, **caractérisé en ce que** les tiges d'accouplement (13, 14) sont fixées sur au moins un profilé de liaison (15, 16) placé de façon fixe sur le véhicule.

5. Véhicule automoteur selon l'une ou plusieurs des revendications précédentes 1 à 4, **caractérisé en ce qu'**un étrier (21) est fixé sur les plaques (17, 18) de la partie d'accouplement (11) côté outil.

6. Véhicule automoteur selon la revendication 5, **caractérisé en ce que** les logements (24, 25), associés à la tige d'accouplement (14) inférieure, sont réalisés avec une forme semi-circulaire ou en forme de U inversé.

7. Véhicule automoteur selon la revendication 1, **caractérisé en ce que** les surfaces, associées aux arêtes avant libres, des logements (26, 27) associés à la tige d'accouplement (13) supérieure sont réalisées dans la zone inférieure comme des surfaces obliques.

8. Véhicule automoteur selon la revendication 7, **caractérisé en ce que** les surfaces faisant face aux surfaces inclinées délimitent des ergots d'engagement par l'arrière pour la tige d'accouplement (13) supérieure.

9. Véhicule automoteur selon l'une ou plusieurs des revendications précédentes 1 à 8, **caractérisé en ce que** les logements (26, 27) supérieurs sont verrouillés par des éléments de verrouillage (22, 23) basculants après l'engagement par l'arrière sur la tige d'accouplement (13) supérieure.

10. Véhicule automoteur selon la revendication 9, **caractérisé en ce que** les éléments de verrouillage (22, 23) sont conçus comme des doigts qui sont placés sur des pattes (30, 31), lesquelles sont montées de façon basculante sur les plaques (17, 18).

11. Véhicule automoteur selon la revendication 10, **caractérisé en ce que** les pattes (30, 31) sont placées sur les zones d'extrémité libre d'une tige (32) montée de façon rotative dans les plaques (17, 18), et **en ce que** les éléments de verrouillage (22, 23) sont disposés dans la zone faisant face à la tige (32).

12. Véhicule automoteur selon la revendication 11, **caractérisé en ce qu'**une manette (33) est placée sur l'une des pattes (30, 31).

13. Véhicule automoteur selon l'une ou plusieurs des revendications précédentes 1 à 12, **caractérisé en ce que** la partie d'accouplement (11) côté outil est placée de façon fixe sur un bras (12), qui présente un doigt d'accouplement (34) vertical sur l'extrémité opposée.
